Europäisches Patentamt

European Patent Office

Office européen des brevets

(19)

(11) EP 1 353 279 A1

(12) EUROPEAN PATENT APPLICATION

(43) Date of publication:
15.10.2003 Bulletin 2003/42

(51) Int Cl.⁷: **G06F 17/30**

(21) Application number: 02290920.4

(22) Date of filing: 12.04.2002

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Bouygues S.A.**
**75008 Paris (FR)**

(72) Inventors:
• **CASEAU, Yves**
**78000 Versailles (FR)**
• **LABURTHE, Francois**
**92260 Fontenay-aux-Roses (FR)**

(74) Representative: **Le Forestier, Eric et al**
**Cabinet Régimbeau**
**20, rue de Chazelles**
**75847 Paris cedex 17 (FR)**

(54) **Method and system for computer-aided data-driven adaptation of database queries**

(57)     A method for adjusting queries made by a user on a data access equipment for accessing a multidimensional database through a search engine in a server equipment, the method comprising the following steps:

(a) generating at the data access equipment an initial user-defined query formed by a combination of constraints along different dimensions of the database, and transmitting this query to the server equipment;
(b) identifying a set of results matching said initial query by means of the search engine;
(c) if the number of results in the set is within a prescribed range, providing said results to the data access equipment for display to the user;
(d) if the number of results in the set is above said range, then subdividing said set of results into at least two subsets of results each matching said query and at least two additional and complementary constraints, respectively,
(e) providing to the data access terminal, for display, information about said additional constraints and the number of results in the respective subsets of results,
(f) if the number of results in the set is under said range, then building at least one relaxed query comprising all the constraints of the initial query but at least one, and identifying a set of relaxed results matching that relaxed query,
(g) providing to the data access equipment, for display, information about said relaxed query and the number of relaxed results.

We found 721 answers for you :

There are too many answers . We invite you to refine your search.

You can specify your criteria by going back to the proceding form or let you guiding for refining your price criteria :
— 81

| | |
|---|---|
| lower than  103000 € | 238 apartments : 2 and 3 rooms; 30.95 to 39.55m² |
| from 103 to 126000 € | 244 apartments : 2 and 3 rooms; 36.67 to 48.59m² |
| more than 126000 € | 239 apartments : 51.26 to 65.67m²; 3 rooms |

For other suggestives of refinement as :     number of rooms
orientation
terrace or balcony    } 83
82    program
You can consult too the 721 answers ⌐

FIG.8

EP 1 353 279 A1

## Description

The present invention generally relates to a method for query-based access to data organized in a multidimensional database, like a catalog-type database.

Background of the invention

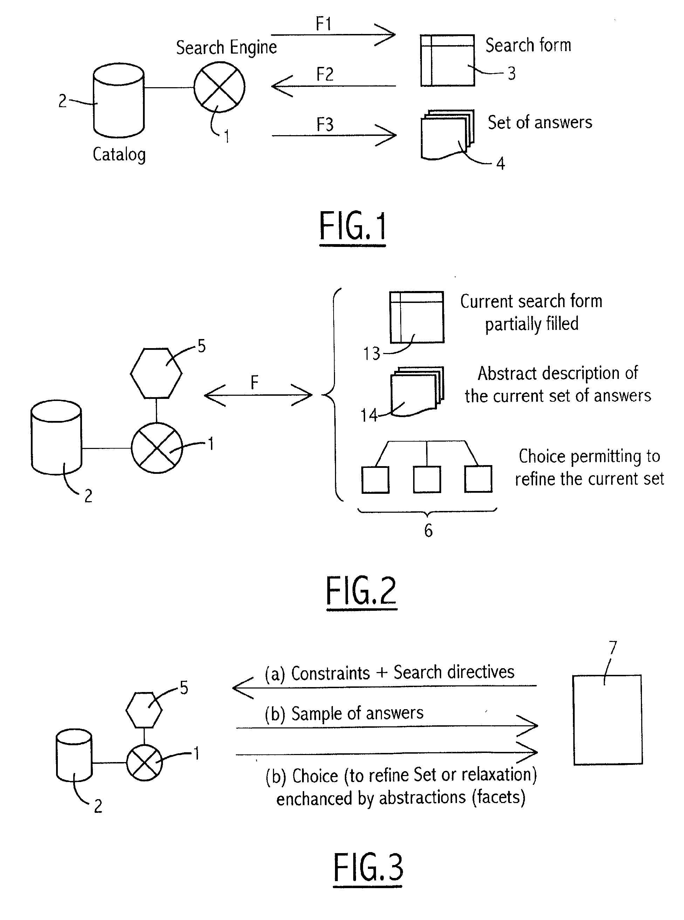

In nowadays technologies, a search engine is typically used in order to retrieve data in a database in accordance with a query, for instance when a user on a client computer system accesses a database on a server computer system through the Internet. More particularly, and referring to Fig. 1, a search engine 1 hosted in a server equipment and linked to a catalog-type database 2 presents to a client equipment a search form 3 to in step F1. The user then fills in some or all of the fields (criteria) of the form 3 to construct a query. In a step F2, the filled form is sent back to the search engine in the server. The search engine then retrieves in the database a set of results 4 matching the query. In a step F3, the search engine sends the set of results, or a part of this set, to the client equipment.

A major drawback of these known systems is that there is no visibility for the user of the impact of each component of the query (i.e. each individual criterion) on the number of results, so that the user ignores until the results arrive whether there will be a reasonable number or results, or too few results, or to many results. Neither does he understand the relationships between the components of the query, so that he may fill in redundant or incompatible criterions.

At best, when the search engine indicates to the user a high number of matching results, the user may refine by himself the query so as to decrease this number, typically by providing additional criteria in the search form or by restricting some of the existing criteria, so as to decrease this number.

But the above-mentioned drawback is still present, as the user will ignore the actual impact of the new and/or amended criterion or criteria on the number of results, so that he may still be facing an excessive number of results or, on the contrary, obtain too few results in an unpredictable manner.

On the contrary, when no results are found by the search engine based on a given query, the user has to build a new query by himself, although he ignores what criterion or combination of criteria was the main cause for the absence of results.

Summary of the invention

An object of the present invention is to provide a method for query-based access to data in a multidimensional and possibly heterogeneous database that overcomes the preceding disadvantages.

More particularly, the present invention seeks to provide a method and system capable of proposing to a user additional or amended search criteria for optimizing a search strategy, and informing the user of the consequences of using such additional or amended search criteria.

Still more particularly, the present invention aims at a process driven by data so as to assist a user in searching database items or objects that are best suited to his wishes.

To this end, the present invention provides according to a first aspect a method for adjusting queries made by a user on a data access equipment for accessing a multidimensional database through a search engine in a server equipment, the method comprising the following steps:

(a) generating at the data access equipment an initial user-defined query formed by a combination of constraints along different dimensions of the database, and transmitting this query to the server equipment;
(b) identifying a set of results matching said initial query by means of the search engine;
(c) if the number of results in the set is within a prescribed range, providing said results to the data access equipment for display to the user;
(d) if the number of results in the set is above said range, then subdividing said set of results into at least two subsets of results each matching said query and at least two additional and complementary constraints, respectively,
(e) providing to the data access terminal, for display, information about said additional constraints and the number of results in the respective subsets of results,
(f) if the number of results in the set is under said range, then building at least one relaxed query comprising all the constraints of the initial query but at least one, and identifying a set of relaxed results matching that relaxed query,
(g) providing to the data access equipment, for display, information about said relaxed query and the number of relaxed results.

Preferred, but non limiting aspects of this method are as follows:

- the information provided in step (e) contains user actuatable commands for providing to the data access terminal the respective subsets of results.

- the information provided in step (g) contains user actuatable commands for providing to the data access terminal the set of relaxed results.

- each constraint comprises a path defining a database dimension to which the constraint applies, and further comprising the steps of storing and updating, in relation with at least some paths, respective path strength attributes.

- each strength attribute is user-dependent.

- step (d) is performed by a clustering technique on the element values of the results of the set along a selected path.

- said database is heterogeneous and step (d) is performed by using one among a plurality of clustering techniques depending on the type of data such as numerical, Boolean, string, objects from a class hierarchy, lists of objects, symbols from semantic concept hierarchies, etc. along the selected path.

- said selected path is selected as a function of the value of its strength attribute.

- said selected path is further selected as a function of the ability of said element values to be split into clusters.

- the method further comprises the step of sorting intermediate results belonging to a set of results matching an intermediate query made of a subset of the constraints in the initial query along at least one dimension corresponding to a constraint present in the initial query but absent from the intermediate query, and the step of building a corresponding relaxed query comprises combining the constraints belonging to the intermediate query with a relaxed constraint which is determined as being matched by a number of sorted intermediate results which are the closest to said absent constraint or constraints along said dimension or dimensions.

- the method further comprises the step of forming the intermediate queries by a process involving identification of impossible constraints, single-relaxable constraints and multi-relaxable constraints in the initial query.

- the search engine incorporates fuzzy logic.

- the method comprises the further steps of computing, in a given set of results, at least one property matched by the values of said results along at least one dimension, and providing to said data access equipment information about said at least one property for display to the user.

- the or each property belongs to a type including a numerical range, a list of strings, a subset of an ontology, etc.

- said information about said at least one property is displayed on the data access equipment in the vicinity of a query-generation user-input area corresponding to the same database dimension.

According to a second aspect, the present invention provides a database access system comprising a data access equipment connected to a server equipment, said server equipment hosting a search engine capable of accessing a multidimensional database, and further comprising a user interface in said data access equipment for generating user-defined queries formed by combinations of constraints along different dimensions of the database and for transmitting said queries to the server equipment, and said search engine being capable of retrieving in the database a set of results matching a given query, said system being characterized in that it further comprises a query adjustment unit in said server equipment, said query adjustment unit comprising:

(a) comparing means for determining whether the number of results in a set of results retrieved from an initial query is within or outside a given range,
(b) subdivision means capable, if the number of results in the set is above said range, to subdivide said set of results into at least two subsets of results each matching said query and at least two additional and complementary constraints, respectively,
(c) query relaxing means capable, if the number of results in the set is under said range, to build at least one relaxed query comprising all the constraints of the initial query but at least one.

Preferred, but non limiting aspects of this system are as follows:

- said data access equipment comprises user actuatable commands for providing to the data access terminal the respective subsets of results.

- said data access equipment comprises user actuatable commands for providing to the data access terminal a set of relaxed results corresponding to a respective relaxed query.

- each constraint comprises a path defining a database dimension to which the constraint applies, and wherein the server equipment comprise a storage for storing, in relation with at least some paths, respective variable path strength attributes.

- each strength attribute is user-dependent.

- said server equipment comprises at set of clustering tools, and said subdivision means is adapted to select a clustering tool for making said subsets of results based on the element values of the results of the set along a selected path.

- said database is heterogeneous and said clustering tools are adapted to various types of data such as numerical, Boolean, string, objects from a class hierarchy, lists of objects, symbols from semantic concept hierarchies, etc. along the selected path.

- the server equipment comprises path selection means for selecting a path as a function of the value of its strength attribute.

- said selection means is further capable of selecting a path as a function of the ability of said element values to be split into clusters.

- said query relaxing means is capable of building a plurality of relaxed queries, each relaxed query comprising all the constraints of the initial query but one.

- the server equipment further comprises result selection means for sorting results belonging to a set of intermediate results corresponding to an intermediate query with at least one of the constraints of the initial query missing, along at least one dimension corresponding to said missing constraint, for retaining as relaxed results for display on the data access equipment a limited number of results whose value along said dimension is closest to said missing constraint, and for building the corresponding relaxed query by combining the intermediate query with a relaxed constraint determined as being matched by said relaxed results.

- the search engine incorporates fuzzy logic.

- at least one relaxed query comprises all the constraints of the initial query but at least a given one, and further comprises at least one relaxed constraint along the path of said at least given one.

- the database includes symbolic data, and a relaxed constraint applicable to symbolic data is a subsumption constraint.

- a relaxed constraint results from the application of fuzzy logic to said given one constraint.

- the server equipment further comprises value range computing means for computing, in a given set of results, at least one value range occupied by the values of said results along at least one or dimension, and for providing to said data access equipment information about said at least one range for display to the user.

- the system further comprises display control means for displaying said information about said at least one range on the data access equipment in the vicinity of a query-generation user-input area corresponding to the same database dimension.

Brief description of the drawings

Other aims, features and advantages of the present invention will appear more clearly from the following description of a preferred embodiment thereof.
In the appended drawings:

- Figure 1, which has been already described, is a diagrammatic illustration of a prior art method;
- Figure 2 is a diagrammatic illustration of an method according to a preferred embodiment of this invention;
- Figure 3 is a diagrammatic illustration of a protocol used by this invention;
- Figures 4 and 5 illustrate a search form which can be used in the method of this invention;
- Figure 6 illustrates a small set of results returned in response to a query;
- Figure 7 illustrates a user interface for helping the user to refine a previous query according to this invention;
- Figures 8 and 9 illustrate a user interface related to a cluster decomposition of a set of results having too many results performed according to this invention; and
- Figures 10a and 10b illustrate a user interface related to a so-called relaxation process according to this invention.

Detailed description of a preferred embodiment

A method and system according to this invention are intended to assist a user who is searching for an item such as a product or a service in a multidimensional database, like a catalog-type database.
A main purpose of these method and system is to assist the user when filling a search form so as to allow him to obtain a reasonable number of matching results while keeping control on the selected criteria (i. e. each component of the query).
As shown in Figure 2, a software unit 5 implementing the method of this invention is capable of cooperating with a conventional search engine 1 connected to a multidimensional database 2. A dialog F is established between a server computer system hosting the search engine 1, the database 2 and the unit 5 (although these elements could be hosted by different network-connected server in a distributed architecture) and a data access equipment (client computer system in a network environment) controlled by the user. This dialog is more particularly illustrated in Figure 3.
The basic operation of the above system is as follows:

- in a first step (a), the user fills in a search form on the client equipment, so that the latter generates a first query which is transmitted to the server; optionally, the search form can include selection directives, i.e. requests for assistance on how to fill in certain fields of the form, in a manner known per se;

- in a second step (b), the search engine 1 retrieves from the database 2 the results matching the query; depending from the number of such results, and under control of unit 5, one among three basic actions are performed:

  * if the number of results is adequate, i.e. lies between predetermined minimum and maximum limits, then these results are returned to the client equipment for display to the user, in a conventional manner per se;
  * if the number of results is too high, i.e. greater than the maximum limit, then the unit 5 cooperates with the search engine 1 so as to elaborate a set of so-called "restriction" choices for allowing the user to refine the first query, and this set of choices is provided to the client equipment for display to the user;
  * if on the contrary the number of results is too small, i.e. lower than the minimum limit, then unit 5 cooperates with search engine 1 so as to elaborate a set of so called "relaxation" choices for allowing the user relax the first query, and this set of choices is provided to the client equipment for display to the user.

Therefore, as soon as the number of results matching the first query is not adequate, the user receives from the server assistance for building a second query that will either lead to an adequate number of matching results, or still lead to a too high or too low number of results, it which case the above process is repeated until an suitable query has been built and returns an adequate number of results.

Preferably, the elaboration of the restriction or relaxation choices by unit 5 in cooperation with search engine 1 is designed so as to determine, for each choice, the number of results that will be returned to the user if this choice is selected by the user. These numbers are transmitted by the server equipment to the client equipment at the same time as said choices, and provide further assistance to the user when he comes to choice selection.

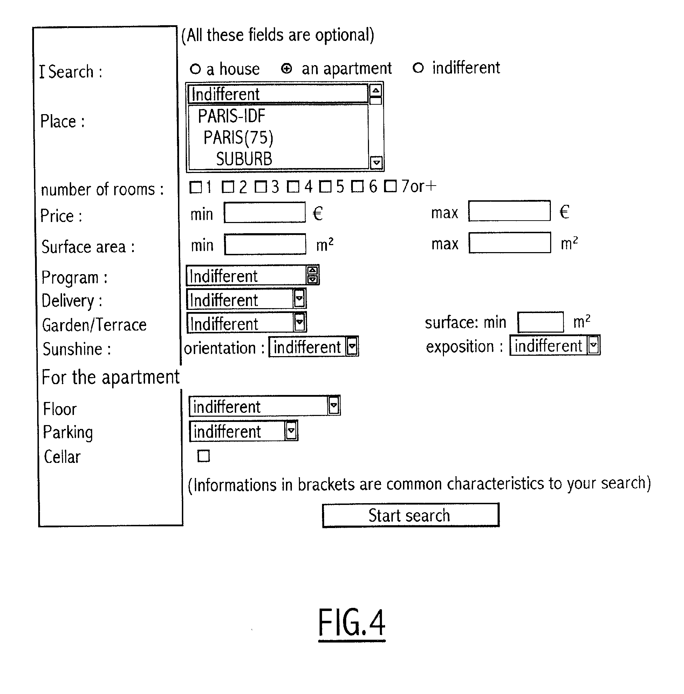

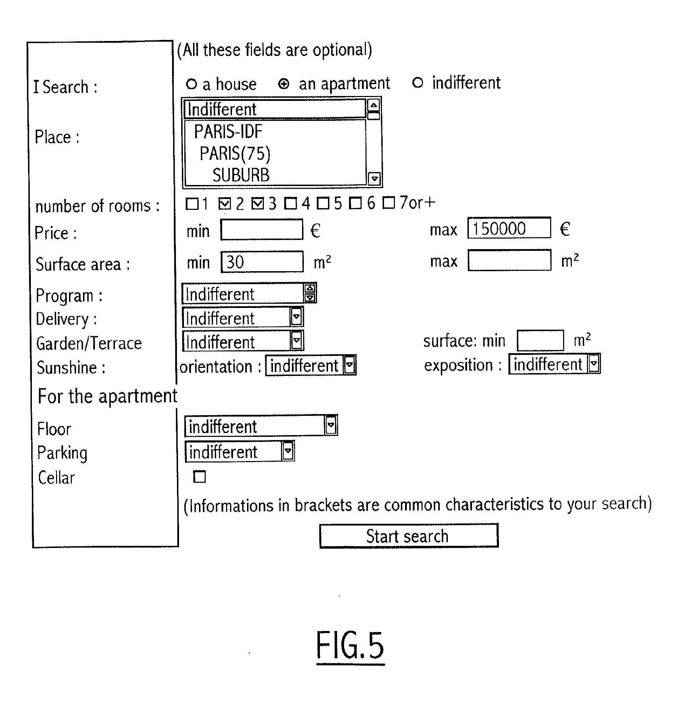

The method and system according to the present invention will now be described in greater detail with reference to a specific practical example in the field of real estate business and with further reference to Figures 4 to 10b.

a) *Database structure*

A preferred data structure of a multidimensional database such as a catalog-type database for use with the present invention is an object-oriented structure, in a manner known per se. An underlying language can be for instance SGML or XML.

In addition to the conventional field formats such as "String", "Number", "Date", "Boolean", etc. a "Symbol" format can also be provided, which defines keywords or concepts organized in a tree or graph hierarchy, so that various strategies of symbol grouping can be performed (such as between geographical places, synonyms, similarities, etc.).

In the present example, a database of houses and apartments for sale held by real-estate company can be structured as follows:

- a class hierarchy for all possible kinds of housing (house, apartment, penthouse, etc.) and all possible kinds of parking space (private box, external parking lot, etc.);
- string fields for the name of the contractor, the name of the building, etc.,
- boolean fields for the presence/absence of various equipments (air conditioning, cellar, etc.),
- dates and numerical fields as in conventional object models,
- symbols for values that can be described in a structured domain with various levels of details; this is typically the case for geographical information, where the state, the region, the district, the city or the neighborhood can specify a place; these symbols are stored in a suitable ontology data file.

Figure 4a illustrates an exemplary search form that can be displayed on the client computer system for searching through the real-estate database. This form includes a number of fields that correspond to at least some of the fields in the data structure and share the same field type. It should be noted that the "place" field which is a symbol field is capable to display as a "pop-up" the various possible place items handled in the database, as determined by the ontology file. In the present example, it is shown that the "PARIS IDF" (for Paris Ile-de-France, i.e. Paris region) includes "PARIS (75)" (i.e. Paris city) and "SUBURB".

Once the user presses the "start search" button in the display of Figure 4a, the query corresponding to the constraints previously selected by the user is sent to the server equipment, where the search engine first retrieves the matching results. In the present example and as shown in Figure 4a, the user is looking for an apartment in the PARIS REGION area, having 2 or 3 rooms, a surface of at least 30 m2, and a maximum price of 150,000 Euros.

Before any results are transmitted to the client equipment, unit 5 first checks whether the number of results is lower or higher than the minimum and maximum values as explained above. If the number is in range, i. e. if the number or results is neither too low nor too high, then the results are provided to the client equipment, e.

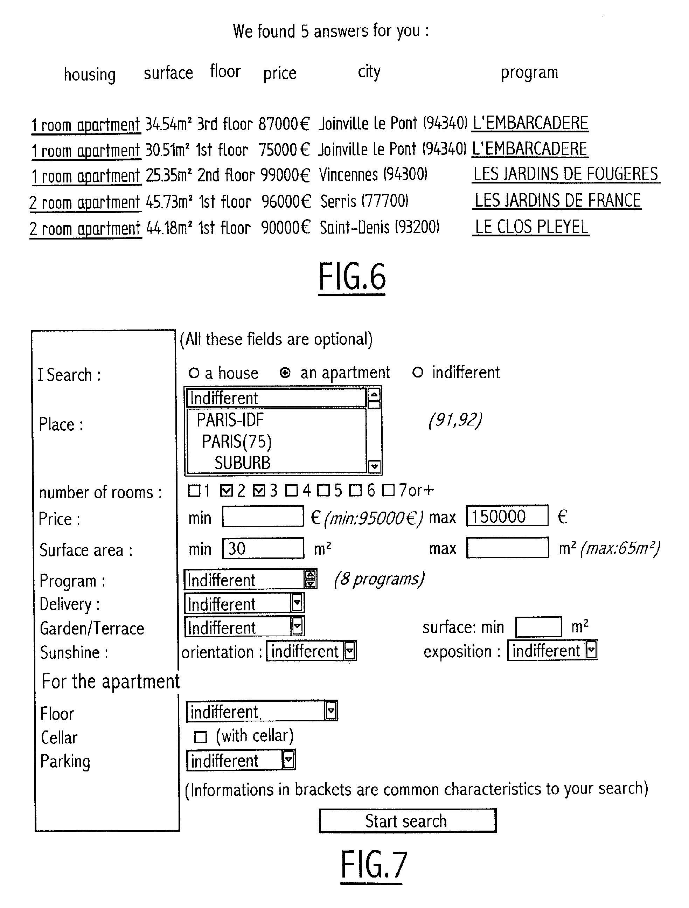

g. in the form of one or several HTML pages showing the actual results, for display to the user, just like in a conventional system. An example of the results displayed in such case on the client equipment display is shown in Figure 6.

In the contrary case, unit 5 prevents the server to output any result to the client equipment, but performs actions as will now be described in detail.

First of all, it should be mentioned that unit 5 keeps in a memory a number of data useful for implementing the inventive method.

Each individual search criterion or so-called "path constraint" in the present specification (e.g. "price lower than 150,000 Euros") is defined with a path (here the the "price" field in the data structure), an operator (here "lower than") and a value (here 150,000).

Besides, unit 5 stores in a memory in association with each path and with each identified user one or several so-called "strength" attributes. In the present species, each strength attribute is a numerical value that indicates how the corresponding path (e.g. the price criterion) is appreciated as being discriminatory or important by the user. For instance, a value of 1 for the strength attribute determines a nominal discriminatory ability or importance, while a higher integer determines a weakened discriminatory ability or a lesser importance.

Preferably, the values of the strength attributes for all possible paths are initialized at the stage of subscription to the search service by each new user, and a suitable user interface allows the new user to indicate to the user the importance allocated to each criterion.

After such initialization, unit 5 can perform dynamic management of strength attributes depending on various factors, e.g. as follows:

- first of all, depending on the data structure itself the strength attribute for each path may be determined by unit 5 itself; for instance, in the real estate catalog example, the price path will inherently be stronger than the program name path;
- secondly, the strength attributes can be dynamically changed depending on the previous behavior of the user when filling search forms; for instance, the more frequently the user has used a given path in the past, the stronger will be this path, etc.

b) *Query refinement*

In the case where the number of matching results (or instances) retrieved in the database exceeds the maximum limit, i.e. there are too many results, then the unit 5 selects one of the paths used in the initial query based on the respective values of the strength attributes so as to identify the currently stronger path, and then, by individually analyzing the data in the set of instances, considers whether for such stronger path there is a possibility of grouping the instances into several clusters (preferably from two to four or five) depending of the values taken by the instances in this path.

In some cases, a strong path will be considered by unit 5 as non-discriminant. This is typically the case when all instances take the same value for the considered path. In the present real estate example, the path "number of rooms" can be initially considered by unit 5 is a strong path, but browsing through all instances by unit 5 will reveal that they all are 2 room apartments. In such case, the path "number of rooms" is rejected as a candidate path for clustering.

More generally, unit 5 selects the paths in their decreasing order of strength, and then determines the discriminating ability of each path depending on the distribution of the values for the respective instances on said path by using clustering techniques which are known per se. From these two parameters (path strength and discriminating ability), a so-called "best path" is selected for actual clustering.

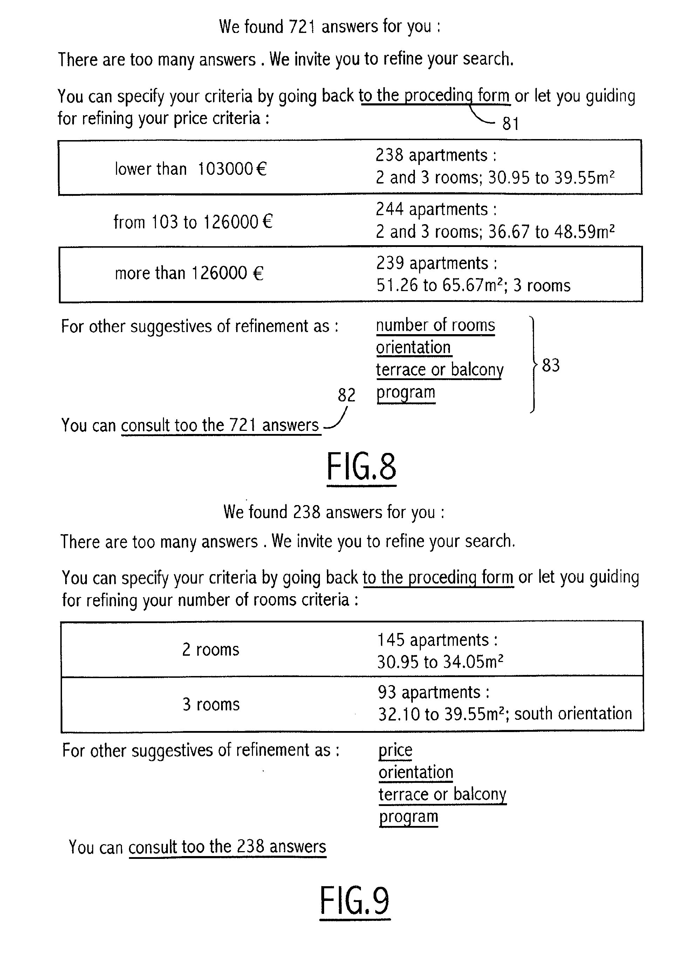

In the present example, and as illustrated in Figure 8, unit 5 has determined that the "price" path is the "best path" for clustering, and a clustering has been performed based on a known clustering technique consisting in finding the boundaries for N clusters (N equals three in the present example) having substantially identical population numbers. Of course, many other known clustering techniques can be used. In particular, when clustering has to be performed on symbol type data, a so-called cumulative marking process, known per se, is advantageously used.

Thereafter, data is provided by the server equipment to the client equipment so as to display what is actually shown in Figure 8, wherein each price window for the respective cluster is displayed, together with the respective number of instances and the respective ranges of the corresponding instances in terms of number of rooms and surface area.

It should be noted here that the paths "number of rooms" and "surface area" selected in the example of Figure 8 can be for instance the paths with have the best strength in the overall path strength ranking (with the exception of the "price" path which has already been used for clustering).

Preferably, the price range indications in Figure 8 serve as hyperlinks for automatically providing to the server equipment a refined having:

- as a price constraint, the considered range,
- as the other constraints, those which were present in the initial constraint.

Supposing now that the user selects the "lower than 103,000 Euros" price range, then the corresponding refined query is applied to the seach engine to retrieve the corresponding set of instances.

As the number of instances is still above the maximum number, i.e. too high, then unit 5 enters again into the process of identifying another "best path" for clustering, depending here again on path strength and discriminating ability. In this example, the "number of rooms" has been determined by unit 5 as "best path", so that data are transmitted by the server equipment to the client equipment so as to display what is shown in Figure 9. Here again, the ranges of numbers of rooms are clickable hyperlinks for generating a corresponding further refined query.

In both Figures 8 and 9, it is to be observed that, although the system and method generate a decomposition of the set of instances according to a best path, the displays on the client equipment still offer the following "manual" possibilities for the user:

- to return to the previous search form in order to manually add additional constraints (hyperlink 81)
- to get all the answers, although in the present species there are a few hundreds of them (hyperlink 82),
- to browse through the set of results through paths other than the best path (hyperlinks 83), being noted here that these additional paths proposed to the user may also be identified using combining path strength and/or discriminating ability.

c) *Query relaxation*

In case the number of instances retrieved with a basic query is lower than a minimum value equal to 1 (although this minimum value can be set in the unit 5 to a higher value), this means that no instance of the database matches the initial query.

The method and system according to the present invention are designed for allowing the user to perform a relaxation on this initial query, i.e. to select a tradeoff among one or several proposed tradeoffs.

For this purpose, the unit 5 has means for splitting the set of constraints constituting the initial query into two groups:

- a subset of constraints which will be kept as such; and
- at least one constraint which is to be relaxed.

A new query, i.e. a partial query is then constructed by unit 5 based on the kept constraints only, while the constraint to be relaxed is disregarded, and the search engine 1 retrieves the corresponding set of results. By analyzing this set of results along the disregarded path corresponding to the disregarded constraint, the unit is capable of determining a subset of the results which comprises a reasonable number of results and which values along the disregarded path are as close as possible to the disregarded constraint.

For instance, if the original query aims at an apartment which has more than three rooms, a price lower than 200,000 Euros and a location inside Paris, this will lead in zero matching result because this combination of constraints is not realistic. In this example, unit 5 first considers that the paths relating to the number of rooms and price should be kept, while the path relating to location should be disregarded. Therefore, a partial query is built by unit 5 with a number of rooms higher than three and a price lower than 200,000 Euros.

The results matching this partial query are then sorted by location, putting first the results that come closest to satisfying the "inside Paris" constraint. Within the location tree structure (ontology), these results are those who have a location which smallest common ancestor with "Paris" is as close as possible to "Paris", e. g. apartments in the suburbs of Paris (with common ancestor "Paris and suburbs"). If the matching results at that stage are too numerous, then unit 5 can automatically refine the partial query by selecting a location in the close suburb of Paris. The matching results are then retained as soon as their number is reasonable.

Similarly, the same routine is performed with the two other possibilities, i.e.:

- keeping the number of rooms and location constraints, and disregarding the price constraint; in such case, the results matching this second partial query are sorted by price, and then the N instances with the cheapest prices (e.g. those who are closest to satisfying the preference for apartments below 200,000 Euros) are retained (N being a fixed or variable parameter held by unit 5);
- keeping the location and price constraints, and disregarding the number of rooms constraint; in such case, the results matching this third partial query are then analyzed in terms of numbers of rooms so as to identify a set of results having both an adequate number of items and a number of rooms as close to three as possible.

From there, the unit 5 has been capable of determining in each case a "relaxed" or "weakened" constraint compared to the constraint which has been temporarily disregarded.

This set of three relaxed queries each comprising two unmodified constraints and one relaxed constraint, is built by the server equipment into a HTML page which is transmitted to the client server for display.

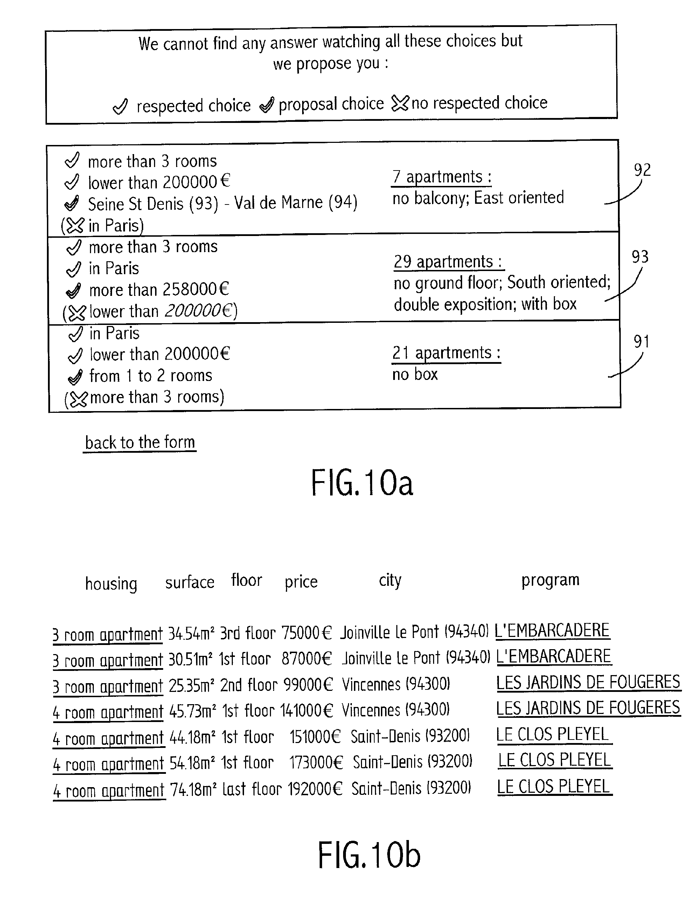

Figure 10a shows the displayed page with the above example and the three respective relaxed queries 92, 93 and 91. The way the query has been relaxed is displayed in the left portion, while each relaxed query can be automatically generated at the client equipment level by a respective hyperlink ("7 apartments" in the fist case, etc.).

Supposing that the user is satisfied with the first relaxed query (i.e. accepts to look for an apartment in the close suburb of Paris), he then makes a mouse click on the "7 apartments" hyperlink and get the corresponding set of results as illustrated in Figure 10b.

Although the above example shows that the unit 5 builds all possible relaxed queries, another possibility is that the unit builds relaxed queries by relaxing only certain queries which are not held as the strongest according to the stored strength attribute of the corresponding path.

In a preferred manner, the relaxation process is conducted to that each relaxed query generated by the process is as close as possible to the original query, and at the same time so that the different relaxed query are significantly different one from another. In this manner, the user will be more likely to find a relaxed query which is best suited to his wish.

The constraints of the initial query are first examined in sequence by unit 5 in order to define:

- so-called "impossible" constraints, i.e. constraints which are satisfied by no item or object in the database, even in the absence of other constraints;
- so-called "single-relaxable" constraints, i.e. constraints which, when individually removed from a query wherein all impossible constraints have first been removed, allow to obtain a number of matching results which is not zero;
- so-called "multi-relaxable" constraints, i.e. all the other constraints.

The process conducted by unit 5 in cooperation with search engine 4 then removes the impossible constraints so that they will not be allowed to appear in any relaxed query. Then the single-relaxable constraints are considered and individually removed from the query one after the other, and the number of corresponding results is determined in each case. Finally, a set of other relaxed queries is built.

An illustration of the way these relaxed queries having such properties are obtained is given herebelow.

Let us suppose an initial user-generated query made of five constraints $c_1$, $c_2$, $c_3$, $c_4$, $c_5$. Let us further suppose that $c_5$ is an impossible constraint and that constraints $c_1$ and $c_2$ are single-relaxable. From there, it is easy to understand that no object matches constraint $c_5$ individually or the constraints $c_1$, $c_2$, $c_3$ and $c_4$ taken together, but that some objects will match constraints $c_2$, $c_3$ and $c_4$ and some will match constraints $c_1$, $c_3$ and $c_4$.

Then the process builds a first intermediate query made of constraints $c_2$, $c_3$ and $c_4$, and a second intermediate query made of constraints $c_1$, $c_3$ and $c_4$, and additionally builds other intermediate relaxed queries comprising constraints $c_1$ and $c_2$ taken together and the other (multi-relaxable) constraints $c_3$ or $c_4$ in the following manner: these multi-relaxable constraints are iterated and combined with the combination of single-relaxable constraints $c_1$ and $c_2$ as long as there are results matching the combination. For instance, supposing that there are results matching the combination of $c_3$ with $c_1$ and $c_2$, and since the combination $c_1$, $c_2$, $c_3$ and $c_4$ does not have any matching result, then combi-

nation $c_1$, $c_2$ and $c_3$ is kept.

The process is repeated with a tentative combination of $c_4$ with $c_1$ and $c_2$, and it is supposed here that there are no matching results.

As there are no other existing multi-relaxable constraints, the process stops and, at the end, intermediate queries ($c_1$, $c_3$, $c_4$), ($c_2$, $c_3$, $c_4$) and ($c_1$, $c_2$, $c_3$) are kept.

The next step consists in combining each of these intermediate queries with a relaxed version of the removed constraint(s) (including impossible constraints).

For instance, starting with intermediate query ($c_2$, $c_3$, $c_4$), the process goes into relaxing constraints $c_1$ and $c_5$ so as to obtain relaxed constraints $c_1'$ and $c_5'$ such that the query made of ($c_2$, $c_3$, $c_4$, $c_1'$, $c_5'$) does have matching results.

This process of relaxing constraints $c_1$ and $c_5$ is conducted as follows:

- first of all, fuzzy logic is used to perform a sorting of all the so-called "intermediate" results matching the intermediate query ($c_2$, $c_3$, $c_4$) depending on their closeness to $c_1$ and $c_5$ along the respective paths or axes;
- the k closest results (k being a predetermined integer) are kept so as to form a "target" set of results;
- this target set is projected onto the paths or axes corresponding to constraints $c_1$ and $c_5$ so as to generate the relaxed constraints $c_1'$ and $c_5'$ which are satisfied by the target set, and a relaxed query is built as ($c_1$ $c_2$, $c_3$, $c_4$, $c_5'$).

The same process is repeated starting with intermediate query ($c_1$, $c_3$, $c_4$) so as to find relaxed constraints $c_2''$ and $c_5''$.

Finally, the process is performed starting with intermediate query ($c_1$, $c_2$, $c_3$) so as to find relaxed constraints $c_4'''$ and $c_5'''$.

At the end, the relaxed queries ($c_1'$, $c_2$, $c_3$, $c_4$, $c_5'$), ($c_1$, $c_2''$, $c_3$, $c_4$, $c_5''$), ($c_1$, $c_2$, $c_3$, $c_4'''$, $c_5'''$) are proposed to the user with associated information, typically the numbers of matching results and properties of these matching results, respectively.

*d) Using fuzzy logic for computing relaxations*

Computing a proposal for a relaxed constraint requires sorting a set of results according to the closest satisfaction of the value along the corresponding path relative to the initial, unrelaxed constraint (i.e. a criterion that is not exactly met). For this purpose the method and system use fuzzy logic in a conventional way, by providing each a constraint with a "constraint valuation", i.e. a value between 0.0 (absolutely false) and 1.0 (absolutely true). A violated constraint generates a variable strictly positive value allowing to differentiate between various degrees of violations of the constraint. For instance, a constraint stating that the price must be below 200,000 Euros will be evaluated to 1.0 for all apartments under 200,000 Euros, to 0.1 for a 210,000 Euros apartment 0,01 for a 300,000 Euros apartment. Thus, for the purpose of relaxation, the results with highest constraint valuation are those who are closest to the initially devised constraints.

The preferred embodiment of the method uses fuzzy logic in the following manner:

- a constraint C is defined by *p op v,* where p is a path in the data model, op an operation and v a value.
- during the step of computation, each constraint C can be valuated on an result by a number v comprised between 0 and 1.
- given a threshold value th $\in$ [0,1] :

- the set of constraints, comprising n constraints $C_1$ to $C_n$, is valuated on a matching object (result) x by the formula

$$\sqrt[n]{v(C_1)\times v(C_2)..\times v(C_n)} \ .$$

The results are those objects x for which the valuation is above the threshold value th.

*e) User terminal*

The present invention as described in the foregoing is well adapted for the case where a server equipment is connected to a personal computer type client equipment, with a reasonably large screen capable of displaying rich forms and rich answers.

However, the present system and method may be easily adapted to communicating environments where the client equipment is a terminal such as mobile phone or a personal digital assistant with a much smaller screen. In such context, it will be generally more appropriate to use search forms including only tick-boxes or the like so as to avoid any typing of string constraints.. The only user inputs in such case are selections equivalent to mouse clicks; nevertheless, the method and system of the invention keep the same principles of operation. The dialog supported by the method for refining a query until a solution is reached has both the advantage of using little space on a screen (at each step, the users chooses between a few -2 or 3 - clicks) and converging towards solution in a few steps (since the proposed choices are dynamically produced from the data). Therefore, the method an system can even be used from an initial empty query (a scenario requiring no forms at all).

It is important to note here that the method and system according to the present invention, as above described, allows to process queries in extremely various data structures, including complex object-oriented structures (i.e. which can handle object aggregation), heterogeneous (i.e. having data with attributes representing the type of data such as numerical value, strings, symbols, etc.) or semantic (i.e. wherein strings can represent text in natural language, with words belonging to a vocabulary and linked by semantic relations).

In addition, the inventive method and system can be used with numerous types of client equipments such as personal computers (PCs), fixed or mobile phones with data being voice data (vocal service) or character or bitmap data (WAP Browser, etc.), personal digital assistants (PDA), etc...

Advantageously, the various parameters used by unit 5, such as number of admissible matching results, etc., can by manually or automatically adjusted as a function of the size of the client side display or other features.

Other, optional features of the present invention are as follows:

*a) fuzzy logic*

In a manner known per se, the method and system can also use fuzzy logic in order to allow some flexibility around a precise constraint set by the user. For instance, the existence of a constraint of the type "price at most equal to 200,000 Euros" in a query can result in an apartment costing 201,000 Euros being retained as a matching result provided that the other constraints are met.

More generally, fuzzy logic will allow to:

- capture results that almost satisfy some or all of constraints;
- differentiate "strong" constraints (i.e. strong user requirements) from "soft" constraints (i.e. user's preferences that might not be met), e.g. by using the strength attributes of the paths. Such attributes control the values for fuzzy constraint valuation; they may be set by the user by means of a suitable exchange between the client system and the server system, and/or configured by unit 5 in particular when it is a question of common sense that a given criterion can be weak or strong from the standpoint of fuzzy logic;
- sort the matches from the strongest (best) to the weakest.

Fuzzy logic is preferably implemented in a conventional way, by providing each a constraint with a "constraint valuation", i.e. a value between 0.0 (absolutely false) and 1.0 (absolutely true). These constraint values for fuzzy logic purposes may be set by the user by means of a suitable exchange between the client equipment and the server equipment, and/or by unit 5 in particular when it is a question of common sense that a given criterion can be weak or strong from the standpoint of fuzzy logic.

*b) result anticipation*

Advantageously, the user is further assisted in query optimization by the method and system of the invention elaborating and providing a global image of a given set of results. More particularly, unit 5 is in that case adapted for computing, for each constraint belonging to a query (or for given constraints only), certain properties of the set or results along the corresponding path. Preferably, this additional information is provided directly in specific area of the search form and in the same constraint language as for filling said form.

For instance, and as shown in Figure 7, if the user is searching for 2 or 3 room apartments in the Paris region with at least 30 square meter surface area and a price at most equal to 150 000 Euros, the server equipment provides to the client equipment, in the form of an updated search form HTML page, and before the matching results are actually displayed or subjected to refinement, the following indications:

- all apartments cost more than 95 000 euros,
- all apartments have a surface area of at most 65 square meters,
- the apartments belong to eight different building programs,
- all apartments are located in the zip code areas 91 or 92,
- all apartments have a cellar.

Such additional information can be displayed in various manners, e.g.:

- by adding an annotation text next to the corresponding field (e.g. "min : 95000 Euros" or "max: 65 m$^2$"),
- by disabling selection options (e.g. it is no longer possible to change the query to apartments having six rooms),
- by providing a restricted selection in a pop-up box (typically for string or symbol fields).

**Claims**

1. A method for adjusting queries made by a user on a data access equipment for accessing a multidimensional database through a search engine in a server equipment, the method comprising the following steps:

   (a) generating at the data access equipment an initial user-defined query formed by a combination of constraints along different dimensions of the database, and transmitting this query to the server equipment;
   (b) identifying a set of results matching said initial query by means of the search engine;
   (c) if the number of results in the set is within a prescribed range, providing said results to the data access equipment for display to the user;
   (d) if the number of results in the set is above said range, then subdividing said set of results into at least two subsets of results each matching said query and at least two additional and complementary constraints, respectively,
   (e) providing to the data access terminal, for display, information about said additional constraints and the number of results in the respective subsets of results,
   (f) if the number of results in the set is under said range, then building at least one relaxed query comprising all the constraints of the initial query but at least one, and identifying a set of relaxed results matching that relaxed query,
   (g) providing to the data access equipment, for display, information about said relaxed query and the number of relaxed results.

2. A method according to claim 1, wherein the information provided in step (e) contains user actuatable commands for providing to the data access terminal the respective subsets of results.

3. A method according to claim 1 or 2, wherein the information provided in step (g) contains user actuatable commands for providing to the data access terminal the set of relaxed results.

4. A method according to any one of claims 1 to 3, wherein each constraint comprises a path defining a database dimension to which the constraint applies, and further comprising the steps of storing and updating, in relation with at least some paths, respective path strength attributes.

5. A method according to claim 4, wherein each strength attribute is user-dependent.

6. A method according to claim 4 or 5, wherein step (d) is performed by a clustering technique on the element values of the results of the set along a selected path.

7. A method according to claim 6, wherein said database is heterogeneous and step (d) is performed by using one among a plurality of clustering techniques depending on the type of data such as numerical, Boolean, string, objects from a class hierarchy, lists of objects, symbols from semantic concept hierarchies, etc. along the selected path.

8. A method according to claim 6 or 7, wherein said selected path is selected as a function of the value of its strength attribute.

**9.** A method according to claim 8, wherein said selected path is further selected as a function of the ability of said element values to be split into clusters.

**10.** A method according to any one of claims 1 to 9, further comprising the step of sorting intermediate results belonging to a set of results matching an intermediate query made of a subset of the constraints in the initial query along at least one dimension corresponding to a constraint present in the initial query but absent from the intermediate query, and wherein the step of building a corresponding relaxed query comprises combining the constraints belonging to the intermediate query with a relaxed constraint which is determined as being matched by a number of sorted intermediate results which are the closest to said absent constraint or constraints along said dimension or dimensions.

**11.** A method according to claim 10, further comprising the step of forming the intermediate queries by a process involving identification of impossible constraints, single-relaxable constraints and multi-relaxable constraints in the initial query.

**12.** A method according to any one of claims 1 to 11, wherein the search engine incorporates fuzzy logic.

**13.** A method according to any one of claims 1 to 12, comprising the further steps of computing, in a given set of results, at least one property matched by the values of said results along at least one dimension, and providing to said data access equipment information about said at least one property for display to the user.

**14.** A method according to claim 13, wherein the or each property belongs to a type including a numerical range, a list of strings, a subset of an ontology, etc.

**15.** A method according to claim 13 or 14, wherein said information about said at least one property is displayed on the data access equipment in the vicinity of a query-generation user-input area corresponding to the same database dimension.

**16.** A database access system comprising a data access equipment connected to a server equipment, said server equipment hosting a search engine capable of accessing a multidimensional database, and further comprising a user interface in said data access equipment for generating user-defined queries formed by combinations of constraints along different dimensions of the database and for transmitting said queries to the server equipment, and said search engine being capable of retrieving in the database a set of results matching a given query, said system being **characterized in that** it further comprises a query adjustment unit in said server equipment, said query adjustment unit comprising:

(d) comparing means for determining whether the number of results in a set of results retrieved from an initial query is within or outside a given range,

(e) subdivision means capable, if the number of results in the set is above said range, to subdivide said set of results into at least two subsets of results each matching said query and at least two additional and complementary constraints, respectively,

(f) query relaxing means capable, if the number of results in the set is under said range, to build at least one relaxed query comprising all the constraints of the initial query but at least one.

**17.** A system according to claim 16, wherein said data access equipment comprises user actuatable commands for providing to the data access terminal the respective subsets of results.

**18.** A system according to claim 16 or 17, wherein said data access equipment comprises user actuatable commands for providing to the data access terminal a set of relaxed results corresponding to a respective relaxed query.

**19.** A system according to any one of claims 16 to 18, wherein each constraint comprises a path defining a database dimension to which the constraint applies, and wherein the server equipment comprise a storage for storing, in relation with at least some paths, respective variable path strength attributes.

**20.** A system according to claim 19, wherein each strength attribute is user-dependent.

**21.** A system according to claim 19 or 20, wherein said server equipment comprises at set of clustering tools, and said subdivision means is adapted to select a clustering tool for making said subsets of results based on the element values of the results of the set along a selected path.

**22.** A system according to claim 21, wherein said database is heterogeneous and said clustering tools are adapted to various types of data such as numerical, Boolean, string, objects from a class hierarchy, lists of objects, symbols from semantic concept hierarchies, etc. along the selected path.

**23.** A system according to claim 21 or 22, wherein the server equipment comprises path selection means for selecting a path as a function of the value of its strength attribute.

**24.** A system according to claim 23, wherein said selection means is further capable of selecting a path as a function of the ability of said element values to be split into clusters.

**25.** A system according to any one of claims 16 to 24, wherein said query relaxing means is capable of building a plurality of relaxed queries, each relaxed query comprising all the constraints of the initial query but one.

**26.** A method according to any one of claims 16 to 25, wherein the server equipment further comprises result selection means for sorting results belonging to a set of intermediate results corresponding to an intermediate query with at least one of the constraints of the initial query missing, along at least one dimension corresponding to said missing constraint, for retaining as relaxed results for display on the data access equipment a limited number of results whose value along said dimension is closest to said missing constraint, and for building the corresponding relaxed query by combining the intermediate query with a relaxed constraint determined as being matched by said relaxed results.

**27.** A system according to any one of claims 16 to 26, wherein the search engine incorporates fuzzy logic.

**28.** A system according to any one of claims 16 to 27, wherein at least one relaxed query comprises all the constraints of the initial query but at least a given one, and further comprises at least one relaxed constraint along the path of said at least given one.

**29.** A system according to claim 28, wherein the database includes symbolic data, and wherein a relaxed constraint applicable to symbolic data is a subsumption constraint.

**30.** A system according to claim 28, wherein a relaxed constraint results from the application of fuzzy logic to said given one constraint.

**31.** A system according to any one of claims 16 to 30, wherein the server equipment further comprises value range computing means for computing, in a given set of results, at least one value range occupied by the values of said results along at least one or dimension, and for providing to said data access equipment information about said at least one range for display to the user.

**32.** A system according to claim 31, further comprising display control means for displaying said information about said at least one range on the data access equipment in the vicinity of a query-generation user-input area corresponding to the same database dimension.

F1

Search Engine

Search form

F2

3

F3

Set of answers

2

Catalog

1

4

# FIG.1

5

Current search form
partially filled

13

F

Abstract description of
the current set of answers

14

Choice permitting to
refine the current set

1

2

6

# FIG.2

5

7

(a) Constraints + Search directives

(b) Sample of answers

1

(b) Choice (to refine Set or relaxation)
enchanced by abstractions (facets)

2

# FIG.3

(All these fields are optional)

I Search :   O a house   ⊕ an apartment   O indifferent

Place :

| Indifferent ▲ |
| PARIS-IDF |
| PARIS(75) |
| SUBURB ▼ |

number of rooms :   ☐ 1 ☐ 2 ☐ 3 ☐ 4 ☐ 5 ☐ 6 ☐ 7or+

Price :   min [        ] €                    max [        ] €

Surface area :   min [        ] m²             max [        ] m²

Program :   [ Indifferent ▲▼ ]

Delivery :   [ Indifferent ▼ ]

Garden/Terrace   [ Indifferent ▼ ]          surface: min [      ] m²

Sunshine :   orientation : [ indifferent ▼ ]     exposition : [ indifferent ▼ ]

For the apartment

Floor   [ indifferent ▼ ]

Parking   [ indifferent ▼ ]

Cellar   ☐

(Informations in brackets are common characteristics to your search)

[ Start search ]

# FIG.4

| | (All these fields are optional) |
|---|---|
| I Search : | O a house    ⊕ an apartment    O indifferent |
| Place : | Indifferent ▲<br>PARIS-IDF<br>PARIS(75)<br>SUBURB ▼ |
| number of rooms : | □1 ☑2 ☑3 □4 □5 □6 □7or+ |
| Price : | min [      ] €        max [150000] € |
| Surface area : | min [30] m²        max [      ] m² |
| Program : | Indifferent ▲▼ |
| Delivery : | Indifferent ▼ |
| Garden/Terrace | Indifferent ▼        surface: min [      ] m² |
| Sunshine : | orientation : [indifferent ▼]    exposition : [indifferent ▼] |
| **For the apartment** | |
| Floor | indifferent ▼ |
| Parking | indifferent ▼ |
| Cellar | □ |
| | (Informations in brackets are common characteristics to your search) |
| | [ Start search ] |

# FIG.5

We found 5 answers for you :

| housing | surface | floor | price | city | program |
|---------|---------|-------|-------|------|---------|
| 1 room apartment | 34.54m² | 3rd floor | 87000€ | Joinville le Pont (94340) | L'EMBARCADERE |
| 1 room apartment | 30.51m² | 1st floor | 75000 € | Joinville le Pont (94340) | L'EMBARCADERE |
| 1 room apartment | 25.35m² | 2nd floor | 99000€ | Vincennes (94300) | LES JARDINS DE FOUGERES |
| 2 room apartment | 45.73m² | 1st floor | 96000€ | Serris (77700) | LES JARDINS DE FRANCE |
| 2 room apartment | 44.18m² | 1st floor | 90000€ | Saint-Denis (93200) | LE CLOS PLEYEL |

## FIG.6

(All these fields are optional)

| | |
|---|---|
| I Search : | ○ a house  ⊙ an apartment  ○ indifferent |
| Place : | [Indifferent ▲]<br>[ PARIS-IDF ]  *(91,92)*<br>[ PARIS(75) ]<br>[ SUBURB ▼] |
| number of rooms : | □1 ☑2 ☑3 □4 □5 □6 □7or+ |
| Price : | min [          ] € *(min:95000€)* max [150000    ] € |
| Surface area : | min [30        ] m²        max [          ] m² *(max:65m²)* |
| Program : | [Indifferent    ⇕] *(8 programs)* |
| Delivery : | [Indifferent    ▼] |
| Garden/Terrace | [Indifferent    ▼]        surface: min [      ] m² |
| Sunshine : | orientation : [indifferent ▼]    exposition : [indifferent ▼] |

For the apartment

| | |
|---|---|
| Floor | [indifferent,      ▼] |
| Cellar | □ (with cellar) |
| Parking | [indifferent    ▼] |

(Informations in brackets are common characteristics to your search)

[ Start search ]

## FIG.7

We found 721 answers for you :

There are too many answers . We invite you to refine your search.

You can specify your criteria by going back to the proceding form or let you guiding
for refining your price criteria : ⌐ 81

| lower than 103000 € | 238 apartments :<br>2 and 3 rooms; 30.95 to 39.55m² |
|---|---|
| from 103 to 126000 € | 244 apartments :<br>2 and 3 rooms; 36.67 to 48.59m² |
| more than 126000 € | 239 apartments :<br>51.26 to 65.67m²; 3 rooms |

For other suggestives of refinement as :
number of rooms
orientation
terrace or balcony ⎫ 83
82 program

You can consult too the 721 answers ⌐

# FIG.8

We found 238 answers for you :

There are too many answers . We invite you to refine your search.

You can specify your criteria by going back to the proceding form or let you guiding
for refining your number of rooms criteria :

| 2 rooms | 145 apartments :<br>30.95 to 34.05m² |
|---|---|
| 3 rooms | 93 apartments :<br>32.10 to 39.55m²; south orientation |

For other suggestives of refinement as :
price
orientation
terrace or balcony
program

You can consult too the 238 answers

# FIG.9

We cannot find any answer watching all these choices but
we propose you :

✅ respected choice ✅ proposal choice ✖ no respected choice

| ✅ more than 3 rooms<br>✅ lower than 200000 €<br>✅ Seine St Denis (93) - Val de Marne (94)<br>(✖ in Paris) | 7 apartments :<br>no balcony; East oriented | 92 |
| ✅ more than 3 rooms<br>✅ in Paris<br>✅ more than 258000€<br>(✖ lower than *200000€*) | 29 apartments :<br>no ground floor; South oriented;<br>double exposition; with box | 93 |
| ✅ in Paris<br>✅ lower than 200000€<br>✅ from 1 to 2 rooms<br>(✖ more than 3 rooms) | 21 apartments :<br>no box | 91 |

back to the form

## FIG.10a

| housing | surface | floor | price | city | program |
|---|---|---|---|---|---|
| 3 room apartment | 34.54m² | 3rd floor | 75000€ | Joinville le Pont (94340) | L'EMBARCADERE |
| 3 room apartment | 30.51m² | 1st floor | 87000€ | Joinville le Pont (94340) | L'EMBARCADERE |
| 3 room apartment | 25.35m² | 2nd floor | 99000€ | Vincennes (94300) | LES JARDINS DE FOUGERES |
| 4 room apartment | 45.73m² | 1st floor | 141000€ | Vincennes (94300) | LES JARDINS DE FOUGERES |
| 4 room apartment | 44.18m² | 1st floor | 151000€ | Saint-Denis (93200) | LE CLOS PLEYEL |
| 4 room apartment | 54.18m² | 1st floor | 173000€ | Saint-Denis (93200) | LE CLOS PLEYEL |
| 4 room apartment | 74.18m² | last floor | 192000€ | Saint-Denis (93200) | LE CLOS PLEYEL |

## FIG.10b

# EP 1 353 279 A1

European Patent Office

**EUROPEAN SEARCH REPORT**

Application Number

EP 02 29 0920

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | OZAWA J ET AL: "Discovery of global knowledge in a database for cooperative answering" FUZZY SYSTEMS, 1995. INTERNATIONAL JOINT CONFERENCE OF THE FOURTH IEEE INTERNATIONAL CONFERENCE ON FUZZY SYSTEMS AND THE SECOND INTERNATIONAL FUZZY ENGINEERING SYMPOSIUM., PROCEEDINGS OF 1995 IEEE INTERNATIONAL CONFERENCE ON YOKOHAMA, JAPAN 20-24 MAR, 20 March 1995 (1995-03-20), pages 849-854, XP010143726 ISBN: 0-7803-2461-7 * page 852, right-hand column, paragraph 3 - page 854, left-hand column, paragraph 7; figures 3-7 * | 1-32 | G06F17/30 |
| Y | WIESMAN F ET AL: "Information retrieval: an overview of system characteristics" INTERNATIONAL JOURNAL OF MEDICAL INFORMATICS, ELSEVIER SCIENTIFIC PUBLISHERS, SHANNON, IR, vol. 47, no. 1-2, 1 November 1997 (1997-11-01), pages 5-26, XP004107501 ISSN: 1386-5056 * page 14, left-hand column, paragraph 2 * * page 17, right-hand column, paragraph 2 - page 18, left-hand column, paragraph 1 * * page 19, right-hand column, paragraph 2 - page 20, right-hand column, paragraph 1 * | 1-32 | |
| | -/-- | | TECHNICAL FIELDS SEARCHED (Int.Cl.7)<br><br>G06F |

The present search report has been drawn up for all claims

| Place of search | Date of completion of the search | Examiner |
|---|---|---|
| THE HAGUE | 18 February 2003 | I. SZÁNTÓ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

19

| European Patent Office | EUROPEAN SEARCH REPORT | Application Number EP 02 29 0920 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | MOTRO A: "VAGUE: a user interface to relational databases that permits vague queries" ACM TRANSACTIONS ON OFFICE INFORMATION SYSTEMS, JULY 1988, USA, 'Online! vol. 6, no. 3, pages 187-214, XP002230819 ISSN: 0734-2047 Retrieved from the Internet: <URL:http://ise.gmu.edu/{ami/research/publ ications/pdf/tois88.pdf> 'retrieved on 2003-02-12! * page 187, paragraph 1 * * page 193, paragraph 1 * * page 202, paragraph 8 * * page 208, paragraph 4 * --- | 1-32 | |
| A | US 6 363 377 B1 (CHIRIAC LIVIU ET AL) 26 March 2002 (2002-03-26) * the whole document * --- | 1-32 | |
| A | US 6 175 829 B1 (LI WEN-SYAN ET AL) 16 January 2001 (2001-01-16) * column 3 - column 10 * ----- | 1-32 | TECHNICAL FIELDS SEARCHED (Int.Cl.7) |

The present search report has been drawn up for all claims

| Place of search THE HAGUE | Date of completion of the search 18 February 2003 | Examiner I. SZÁNTÓ |
|---|---|---|

**EP 1 353 279 A1**

## ANNEX TO THE EUROPEAN SEARCH REPORT
## ON EUROPEAN PATENT APPLICATION NO.

EP 02 29 0920

18-02-2003

| Patent document cited in search report | | Publication date | Patent family member(s) | Publication date |
|---|---|---|---|---|
| US 6363377 | B1 | 26-03-2002 | NONE | |
| US 6175829 | B1 | 16-01-2001 | JP 11328185 A | 30-11-1999 |